# EUROPÄISCHE PATENTANMELDUNG

(11) **EP 4 664 242 A1**
(43) Veröffentlichungstag der Anmeldung: **17.12.2025**
(21) Anmeldenummer: 24181399.7
(22) Anmeldetag: 11.06.2024
(51) Int. Cl.: G06F 1/28, G06F 1/30

(54) **VERFAHREN ZUM ERKENNEN EINES AUSFALLS EINER NETZVERSORGUNGS-SPANNUNG IN EINEM RECH-NERSYSTEM UND RECHNERSYSTEM**

(71) Anmelder: Siemens Aktiengesellschaft, 80333 München (DE)
(72) Erfinder: Andlauer, Timo, 76751 Jockgrim (DE); Huber, Andreas, 76547 Sinzheim (DE); Kandlin, Sergej, 76185 Karlsruhe (DE); Schardein, Thomas, 67483 Kleinfischlingen (DE)
(74) Vertreter: Siemens Patent Attorneys

(57) **Zusammenfassung**

Um zu erkennen, ob ein Rechnersystem (1) regulär und/oder absichtlich heruntergefahren wurde oder wegen einer unerwarteten Netzunterbrechung abgestürzt ist, wird mit einer ersten Wächtereinheit (W1) die Netzversorgungs-Spannung (AC) überwacht eine zweite Wächtereinheit (W2) überwacht, ob eine Systemspannung (DC) ausfällt, für einen erneuten Hochlauf des Rechnersystems (1) nach Ausfall der Netzversorgungs-Spannung (AC) wird eine Anlaufverzögerungsschaltung (ALV) betrieben ein Freigabe-Signal (PM_P3V3D_PCH_EN) für den Hochlauf des Rechnersystem (1) zu erzeugen, wobei das Freigabe-Signal (PM_P3V3D_PCH_EN) auf einen Low-Pegel gesetzt wird, wenn das Netzspannungs-Signal (PS_PWRGD) den Low-Pegel aufweist, weist das Netzspannungs-Signal (PS_PWRGD) wieder den High-Pegel auf, wird ein Verzögerungstimer (VT) mit einer Verzögerungszeit (VZ) gestartet, ist die Verzögerungszeit (VZ) abgelaufen, wird das Freigabe-Signal (PM_P3V3D_PCH_EN) für den Hochlauf wieder auf den High-Pegel gesetzt.

## Beschreibung

Die Erfindung betrifft ein Verfahren zum Erkennen eines Ausfalls einer Netzversorgungs-Spannung in einem Rechnersystem, welches über die Netzversorgungs-Spannung mittels einer Systemspannung betrieben wird, wobei eine erste Wächtereinheit die Netzversorgungs-Spannung überwacht und bei vorhandener Versorgungs-Spannung ein Netzspannungs-Signal auf einen High-Pegel hält und für den Fall, das die Netzversorgungs-Spannung ausfällt das Netzspannungs-Signal auf einen Low-Pegel setzt.

Insbesondere nach einem Netzausfall kann es bei Rechnersystemen bzw. PCs vorkommen, das ein Wiederanlauf nicht gelingt. In der Praxis kommt also der Fall vor, das nach einer unerwarteten Netzunterbrechung das Rechnersystem sporadischer nicht wieder anläuft.

Die der Erfindung zugrunde liegende Aufgabe ist es einen Sporadischen Nichtanlauf der PC's nach unerwarteten Netzunterbrechungen zu vermeiden.

Die Aufgabe wird durch das eingangs genannte Verfahren dadurch gelöst, dass eine zweite Wächtereinheit betrieben wird, die Systemspannung zu überwachen und bei vorhandener Systemspannung ein Boardspannungs-Signal auf einen High-Pegel hält und für den Fall, das die Systemspannung ausfällt das Boardspannungs-Signal auf einen Low-Pegel setzt,
weiterhin wird eine Erkennnungsschaltung betrieben das Netzspannungs-Signal und das Boardspannungs-Signal auszuwerten und für den Fall, dass das Netzspannungs-Signal einen Low-Pegel und das Boardspannungs-Signal einen High-Pegel aufweist, wird ein Ausfall der Netzversorgungs-Spannung erkannt,
für einen erneuten Hochlauf des Rechnersystem nach Ausfall der Netzversorgungs-Spannung wird eine Anlaufverzögerungsschaltung betrieben ein Freigabe-Signal für den Hochlauf des Rechnersystem zu erzeugen, wobei das Freigabe-Signal auf einen Low-Pegel gesetzt wird, wenn das Netzspannungs-Signal den Low-Pegel aufweist, weist das Netzspannungs-Signal wieder den High-Pegel auf, wird ein Verzögerungstimer mit einer Verzögerungszeit gestartet, ist die Verzögerungszeit abgelaufen, wird das Freigabe-Signal für den Hochlauf wieder auf den High-Pegel gesetzt.

Das Verfahren beziehungsweise eine entsprechende Schaltung für eine automatischen Anlaufverzögerung kann in einer Hochlauf Sequenz-Schaltung des PC's integriert sein. Sie erkennt, ob der PC regulär und/oder absichtlich heruntergefahren wurde oder wegen einer unerwarteten Netzunterbrechung abgestürzt ist. Bei Wiederanlauf nach Netzausfall löst die Schaltung bzw. das Verfahren eine beispielsweise 4-Sekunden Verzögerung aus, um alle Restspannungen auf dem Motherboard zu entladen und dann von 0V sauber hochzufahren. Bei einer Ersteinschaltung oder nach einem regulären Herunterfahren erfolgt keine 4-Sekundenverzögerung und der PC startet direkt.

Ebenso löst die eingangsgenannte Aufgabe ein Rechnersystem, welches folgendes umfasst, eine Stromversorgungseinheit ausgestaltet aus einer Netzversorgungs-Spannung eine Systemspannung bereitzustellen, eine erste Wächtereinheit ausgestaltet die Netzversorgungs-Spannung zu überwachen und bei vorhandener Versorgungs-Spannung ein Netzspannungs-Signal als ein High-Pegel auszugeben und für den Fall, dass die Netzversorgungs-Spannung ausfällt das Netzspannungs-Signal auf einen Low-Pegel zu setzen, eine zweite Wächtereinheit ausgestaltet die Systemspannung zu überwachen und bei vorhandener Systemspannung ein Boardspannungs-Signal auf einen High-Pegel auszugeben und für den Fall, dass die Systemspannung ausfällt das Boardspannungs-Signal auf einen Low-Pegel zu setzen,
eine Erkennungsschaltung ausgestaltet das Netzspannungs-Signal und das Boardspannungs-Signal auszuwerten und für den Fall, dass das Netzspannungs-Signal einen Low-Pegel und das Boardspannungs-Signal einen High-Pegel aufweist, wird ein Ausfall der Netzversorgungs-Spannung erkannt und ein Ausfallmerker gesetzt, eine Anlaufverzögerungsschaltung ausgestaltet für einen erneuten Hochlauf des Rechnersystem nach Ausfall der Netzversorgungs-Spannung ein Freigabe-Signal für den Hochlauf des Rechnersystem zu erzeugen, weiterhin ausgestaltet das Freigabe-Signal auf einen Low-Pegel zu setzten, wenn das Netzspannungs-Signal den Low-Pegel aufweist und wenn das Netzspannungs-Signal wieder den High-Pegel aufweist, einen Verzögerungstimer mit einer Verzögerungszeit zu starten, weiterhin ausgestaltet nach Ablauf der Verzögerungszeit, das Freigabe-Signal für den Hochlauf wieder auf den High-Pegel zu setzen.

Die Schaltung für eine automatischen Anlaufverzögerung kann in einer Hochlauf Sequenz-Schaltung des PC's integriert sein. Sie erkennt, ob der PC regulär/absichtlich heruntergefahren wurde oder wegen einer unerwarteten Netzunterbrechung abgestürzt ist. Bei Wiederanlauf nach Netzausfall löst die Schaltung eine Verzögerung aus, um alle Restspannungen auf dem Motherboard zu entladen und von 0V sauber hochzufahren. Bei Ersteinschaltung oder nach regulärem Herunterfahren erfolgt keine 4-Sekundenverzögerung und der PC startet direkt.

Das Netzspannungs-Signal von der Stromversorgung geht bei Netzunterbrechung sofort auf den Low-Pegel bevor die Boardspannungen den Toleranzbereich verlassen.

D.h. der Zustand Netzspannungs-Signal gleich "low" und Boardspannungs-Signal grade noch "high", ist das Kriterium für die Erkennung vom unterwarteten Netzausfall.

Das Freigabe-Signal für einen erneuten Hochlauf der Anlaufverzögerungsschaltung PM_P3V3D_PCH_EN geht auf "low" synchron mit dem Netzspannungs-Signal von der ersten Wächtereinheit und wird von der Anlaufverzögerungsschaltung so lange auf "low"-Pegel gehalten bis
1) Die Stromversorgungseinheit wieder angelaufen ist und Netzspannungs-Signal "high" liefert und
2) bis die Verzögerungszeit für die Entladung von der Boardspannung abgelaufen ist. Danach gibt die Schaltung das Freigabe-Signal "high" aus und der Hochlauf des Rechnersystem bzw. des PC's kann fortgesetzt werden.

Anhand der Zeichnung, in der ein Ausführungsbeispiel der Erfindung veranschaulicht ist, werden im Folgenden die Erfindung und deren Ausgestaltungen erläutert. Es zeigen:
- FIG 1: ein Rechnersystem als Blockschaltbild,
- FIG 2: ein Zeitdiagramm bei einem unerwarteten Netzausfall und
- FIG 3: ein Zeitdiagramm bei einem regulären Hochlauf.

Die vorgeschlagene Erfindung adressiert das Problem des sporadischen Nichtanlaufs von Rechnersystemen oder PCs nach unerwarteten Netzunterbrechungen, durch eine Integration einer Anlaufverzögerungsschaltung in eine Hochlaufsequenz, welche dafür sorgt, dass Restspannungen auf dem Motherboard vor einem Neustart entladen sind. Die Lösung ist besser als ein Einsatz von Lastwiderständen, da sie nur bei Bedarf aktiv wird und verbessert so die Effizienz und Kosten der Geräte.

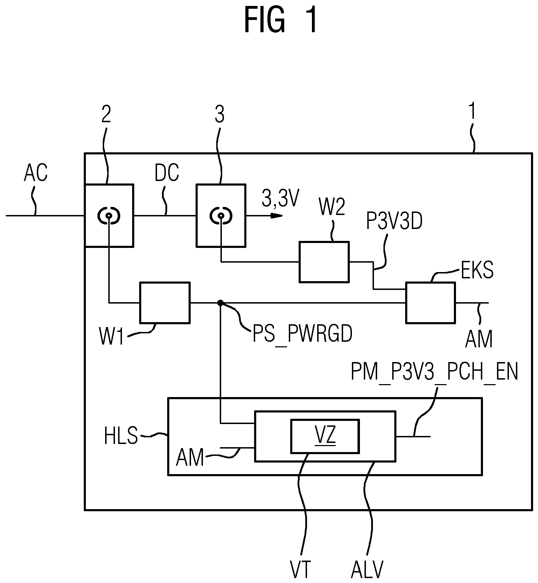

Gemäß FIG 1 ist ein Rechnersystem 1 ähnlich einem Industrie-PC dargestellt. Das Rechnersystem 1 weist eine Stromversorgungseinheit 2 auf, welche ausgestaltet ist, aus einer Netzversorgungs-Spannung AC eine Systemspannung DC bereitzustellen. Um ein Erkennen eines Ausfalls der Netzversorgungs-Spannung AC in dem Rechnersystem 1 zu realisieren, ist eine erste Wächtereinheit W1 vorhanden, welche ausgestaltet ist, die Netzversorgungs-Spannung AC zu überwachen und bei vorhandener Netzversorgungs-Spannung AC ein Netzspannungs-Signal PS_PWRGD auf einem High-Pegel hält. Für den Fall, dass die Netzversorgungs-Spannung AC ausfällt, wird das Netzspannungs-Signal PS_PWRGD auf einen Low-Pegel gesetzt.

Eine zweite Wächtereinheit W2 wird derart betrieben, dass die Systemspannung DC überwacht wird und bei vorhandener Systemspannung DC wird ein Boardspannungs-Signal P3V3D auf einem High-Pegel gehalten. Für den Fall, dass die Systemspannung DC ausfällt, wird das Boardspannungs-Signal P3V3D auf einen Low-Pegel gesetzt.

Um nun zu erkennen, dass eine unerwartete Netzunterbrechung vorliegt oder vorlag, wird eine Erkennungsschaltung EKS derart betrieben, dass das Netzspannungs-Signal PS_PWRGD und das Boardspannungs-Signal P3V3D ausgewertet wird. Für den Fall, dass das Netzspannungs-Signal PS_PWRGD einen Low-Pegel und das Boardspannungs-Signal P3V3D einen High-Pegel aufweist, wird ein Ausfall der Netzversorgungs-Spannung AC erkannt.

Um nun einen sporadischen Nichtwiederanlauf wegen noch vorhandener Restspannungen auf dem Motherboard zu vermeiden, wird eine Anlaufverzögerungsschaltung ALV innerhalb einer Hochlaufschaltung HLS betrieben. In der Anlaufverzögerungsschaltung ALV wird ein Freigabe-Signal PM_P3V3D_PCH_EN für den Hochlauf des Rechnersystems 1 erzeugt. Dazu wird u.a. der Ausfallmerker AM der Erkennungsschaltung EKS verwendet. Das Freigabe-Signal PM_P3V3D_PCH_EN wird so lange auf einen Low-Pegel gehalten, bis das Netzspannungs-Signal PS_PWRGD wieder einen High-Pegel aufweist und ein Verzögerungstimer VT mit einer Verzögerungszeit VZ, vorzugsweise vier Sekunden, abgelaufen ist. Die Anlaufverzögerungsschaltung ALV weist demnach den Verzögerungstimer VT mit einer Verzögerungszeit VZ auf.

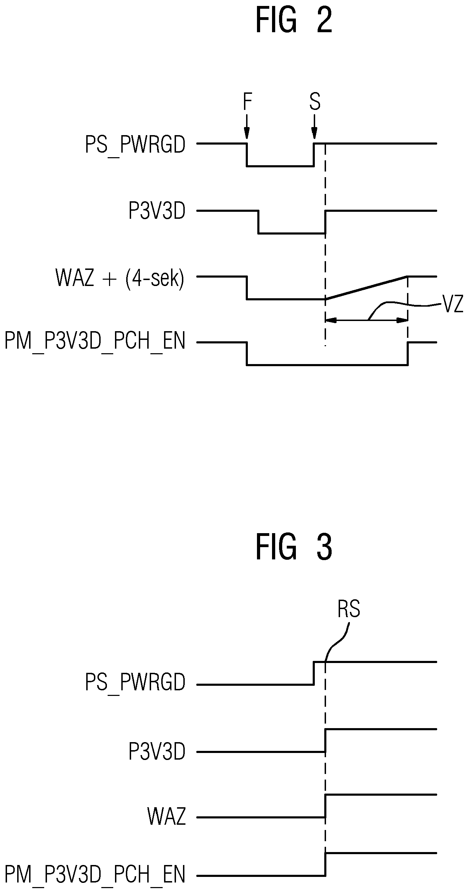

Gemäß FIG 2 wird ein Zeitdiagramm bei einem unerwarteten Netzspannungsausfall gezeigt. Es werden die einzelnen Signale in ihren zeitlichen Verlauf dargestellt. Ab dem Zeitpunkt eines Ausfalls F der Netzversorgungs-Spannung AC geht das Netzspannungs-Signal PS_PWRGD von einem High-Pegel auf einen Low-Pegel. Zu diesem Zeitpunkt ist das Boardspannungs-Signal P3V3D aber noch auf High-Pegel, die Anlaufverzögerungsschaltung ALV nimmt aber jetzt schon das Freigabesignal PM_P3V3D_PCH_EN zurück. Zu einem Zeitpunkt S zu dem das Rechensystem 1 wieder Hochgefahren werden soll "Start" wird, wie in der Wiederanlaufzeit WAZ zu sehen, die Verzögerungszeit VZ abgewartet und erst nach Ablauf des Verzögerungstimer VT mit der Verzögerungszeit VZ wird das Freigabesignal PM_P3V3D_PCH_EN wieder auf High-Pegel gesetzt.

Mit der FIG 3 wird ein Zeitdiagramm für einen regulären Hochlauf gezeigt. Eine Verzögerungszeit VZ muss hier nicht eingehalten werden. Das Netzspannungs-Signal PS_PWRGD hat bereits High-Pegel und zeigt damit, dass die Netzversorungs-Spannung AC und dementsprechend die Systemspannung DC bereit ist. Da das Masserboard jetzt für einen kurzen Zeitpunkt vorgeladen werden muss, wird das Boardspannungs-Signal P3V3D leicht zeitverzögert auf High-Pegel gesetzt.

Die Wiederanlaufzeit WAZ ist nun erheblich kürzer, denn genau um die jetzt nicht gestartete Verzögerungszeit VZ, das Freigabe-Signal PM_P3V3D_PCH_EN ist sofort auf High-Pegel gesetzt.

Im Industrieumfeld ist sowohl eine AC-Netzspannung als auch eine DC-Netzspannung möglich, die Bezugszeichen sind nur beispielhaft gewählt und haben keine einschränkende Aussagekraft bzgl. der Spannungsart.

Das Netzspannungs-Signal PS_PWRGD ist nicht zwingend ein Überwachungssignal von einem Ausgang einer Systemstromversorgungseinheit bzw. eines Netzteils, eine NetzÜberwachung kann zusätzlich innerhalb der Systemstromversorgungseinheit durchgeführt werden, es ist aber auch möglich, dass die Stromversorgung bei korrektem Netzeingang nicht anläuft. In dem Fall bleibt PS_PWRGD = low. PS_PWRGD=high hat die Bedeutung, dass Netz (DC-Gleichstrom oder AC-Wechselstrom) OK ist und die Systemstromversorgungseinheit korrekt läuft und die Ausgangsspannung in der Toleranz ist.

## Patentansprüche

1. Verfahren zum Erkennen eines Ausfalls einer Netzversorgungs-Spannung (AC) in einem Rechnersystem (1), welches über die Netzversorgungs-Spannung (AC) mittels einer Systemspannung (DC) betrieben wird, wobei eine erste Wächtereinheit (W1) die Netzversorgungs-Spannung (AC) überwacht und bei vorhandener Netzversorgungs-Spannung (AC) ein Netzspannungs-Signal (PS_PWRGD) auf einen High-Pegel hält und für den Fall, dass die Netzversorgungs-Spannung (AC) ausfällt das Netzspannungs-Signal (PS_PWRGD) auf einen Low-Pegel setzt,
eine zweite Wächtereinheit (W2) wird betrieben die Systemspannung (DC) zu überwachen und bei vorhandener Systemspannung (DC) ein Boardspannungs-Signal (P3V3D) auf einen High-Pegel hält und für den Fall, dass die Systemspannung (DC) ausfällt das Boardspannungs-Signal (P3V3D) auf einen Low-Pegel setzt,
weiterhin wird eine Erkennungsschaltung (EKS) betrieben das Netzspannungs-Signal (PS_PWRGD) und das Boardspannungs-Signal (P3V3D) auszuwerten und für den Fall, dass das Netzspannungs-Signal (PS_PWRGD) einen Low-Pegel und das Boardspannungs-Signal (P3V3D) einen High-Pegel aufweist, wird ein Ausfall der Netzversorgungs-Spannung (AC) erkannt,
für einen erneuten Hochlauf des Rechnersystems (1) nach Ausfall der Netzversorgungs-Spannung (AC) wird eine Anlaufverzögerungsschaltung (ALV) betrieben ein Freigabe-Signal (PM_P3V3D_PCH_EN) für den Hochlauf des Rechnersystem (1) zu erzeugen, wobei das Freigabe-Signal (PM_P3V3D_PCH_EN) auf einen Low-Pegel gesetzt wird, wenn das Netzspannungs-Signal (PS_PWRGD) den Low-Pegel aufweist, weist das Netzspannungs-Signal (PS_PWRGD) wieder den High-Pegel auf, wird ein Verzögerungstimer (VT) mit einer Verzögerungszeit (VZ) gestartet,
ist die Verzögerungszeit (VZ) abgelaufen, wird das Freigabe-Signal (PM_P3V3D_PCH_EN) für den Hochlauf wieder auf den High-Pegel gesetzt.

2. Verfahren nach Anspruch 1, wobei der Betrieb der Anlaufverzögerungsschaltung (ALV) innerhalb einer Hochlaufsequenz des Rechnersystems (1) ausgeführt wird.

3. Rechnersystem (1) umfassend
- eine Stromversorgungseinheit (2) ausgestaltet aus einer Netzversorgungs-Spannung (AC) eine Systemspannung (DC) bereitzustellen,
- eine erste Wächtereinheit (W1) ausgestaltet die Netzversorgungs-Spannung (AC) zu überwachen und bei vorhandener Netzversorgungs-Spannung (AC) ein Netzspannungs-Signal (PS_PWRGD) als ein High-Pegel auszugeben und für den Fall, dass die Netzversorgungs-Spannung (AC) ausfällt das Netzspannungs-Signal (PS_PWRGD) auf einen Low-Pegel zu setzen,
- eine zweite Wächtereinheit (W2) ausgestaltet die Systemspannung (DC) zu überwachen und bei vorhandener Systemspannung (DC) ein Boardspannungs-Signal (P3V3D) auf einen High-Pegel auszugeben und für den Fall, dass die Systemspannung (DC) ausfällt das Boardspannungs-Signal (P3V3D) auf einen Low-Pegel zu setzen,
- eine Erkennungsschaltung (EKS) ausgestaltet das Netzspannungs-Signal (PS_PWRGD) und das Boardspannungs-Signal (P3V3D) auszuwerten und für den Fall, dass das Netzspannungs-Signal (PS_PWRGD) einen Low-Pegel und das Boardspannungs-Signal (P3V3D) einen High-Pegel aufweist, wird ein Ausfall der Netzversorgungs-Spannung (AC) erkannt und ein Ausfallmerker (AM) gesetzt,
- eine Anlaufverzögerungsschaltung (ALV) ausgestaltet für einen erneuten Hochlauf des Rechnersystem (1) nach Ausfall der Netzversorgungs-Spannung (AC) ein Freigabe-Signal (PM_P3V3D_PCH_EN) für den Hochlauf des Rechnersystem (1) zu erzeugen, weiterhin ausgestaltet das Freigabe-Signal (PM_P3V3D_PCH_EN) auf einen Low-Pegel zu setzen, wenn das Netzspannungs-Signal (PS_PWRGD) den Low-Pegel aufweist und wenn das Netzspannungs-Signal (PS_PWRGD) wieder den High-Pegel aufweist, einen Verzögerungstimer (VT) mit einer Verzögerungszeit (VZ) zu starten, weiterhin ausgestaltet nach Ablauf der Verzögerungszeit (VZ), das Freigabe-Signal (PM_P3V3D_PCH_EN) für den Hochlauf wieder auf den High-Pegel zu setzen.
